# EUROPÄISCHE PATENTSCHRIFT

(11) **EP 0 989 923 B1**
(45) Veröffentlichungstag und Bekanntmachung des Hinweises auf die Patenterteilung: **03.12.2003**
(21) Anmeldenummer: 98936174.6
(22) Anmeldetag: 16.06.1998
(51) Int. Cl.: B23Q 39/00, B23Q 1/00, B23Q 37/00, B23Q 1/01, B23Q 39/02

(54) **HOCHFLEXIBLE WERKZEUGMASCHINE**
HIGHLY FLEXIBLE MACHINE TOOL
MACHINE OUTIL A FLEXIBILITE ELEVEE

(30) Priorität: 17.06.1997 DE 19725630; 22.10.1997 DE 19746494
(43) Veröffentlichungstag der Anmeldung: 05.04.2000
(73) Patentinhaber: WITZIG & FRANK GmbH, 77652 Offenburg (DE)
(72) Erfinder: BAUMBUSCH, Frank, D-69412 Eberbach (DE); BAUER, Walter, D-75397 Simmozheim (DE)
(74) Vertreter: Patentanwälte Rüger, Barthelt & Abel
(86) Internationale Anmeldenummer: DE9801629
(87) Internationale Veröffentlichungsnummer: WO98057777

(56) Entgegenhaltungen:
- EP-A- 0 452 735
- EP-A- 0 467 253
- EP-A- 0 712 682
- AT-B- 302 768
- DE-A- 3 626 324
- DE-A- 4 301 393
- DE-A- 4 430 113
- DE-U- 8 814 245
- DE-U- 9 014 605
- GB-A- 2 056 350
- GB-A- 2 283 697
- DATABASE WPI Section PQ, Week 85305. September 1985 Derwent Publications Ltd., London, GB; Class P56, AN 85-182696 XP002083761 & SU 1 133 068 A (UFA AVIATION INST) , 7. Januar 1985

## Beschreibung

Die Erfindung betrifft eine Werkzeugmaschine, insbesondere zur spanenden Bearbeitung von Werkstücken.

Zur Bearbeitung kompliziert geformter Werkstücke, die zu ihrer Herstellung eine größere Anzahl unterschiedlicher spanender Bearbeitungsvorgänge durchlaufen müssen, insbesondere zur Serienbearbeitung oder -herstellung solcher Werkstücke, werden häufig Werkzeugmaschinen verwendet, die an einem Werkstück hintereinander unterschiedliche Bearbeitungsvorgänge aus unterschiedlichen Richtungen ausführen: Ein Beispiel für eine solche Maschine ist aus der DE 43 01 393 C2 ersichtlich. Die hier geoffenbarte Werkzeugmaschine ist als Rundtakt-Werkzeugmaschine ausgeführt und weist einen innerhalb eines käfigartigen Grundrahmens angeordneten kreuzförmigen Werkstückträger auf. An den Seitenflächen der Arme des kreuzförmigen Werkstückträgers sind Werkstückaufnahmeeinrichtungen angeordnet. Während der Werkstückträger um eine Vertikalachse dreh- und schaltbar ist, sind die einzelnen Werkstückaufnahmen jeweils um Horizontalachsen drehbar, die tangential zu einem gedachten Kreis angeordnet sind. Beim Weiterschalten des Werkstückträgers durchlaufen die Werkstücke nacheinander unterschiedliche Arbeitsstationen. Diese werden durch Bearbeitungseinheiten definiert, die an dem Grundgestell in mehreren Richtungen verstellbar gehalten sind. Jede Bearbeitungseinheit weist eine Arbeitsspindel auf, die mit einem Revolverkopf versehen ist. Der Revolverkopf ist als Kronenrevolver ausgebildet. Seine Spindeln sind gemeinsam von der Arbeitsspindel angetrieben. Durch Drehung des Revolverkopfs kann jeweils ein gewünschtes Werkzeug in eine gerade Verlängerungsposition der Arbeitsspindel überführt werden, womit es in Bearbeitungsposition ist. Dabei sind alle Spindeln des Revolverkopfs zugleich angetrieben und sie laufen auch während des Drehens oder Weiterschaltens des Revolverkopfs weiter.

Mit dieser Rundtakt-Werkzeugmaschine ist eine Fünf- Seiten-Bearbeitung der Werkstücke möglich, wobei eine hohe Effektivität erreicht wird. Jedoch können Schräg-flächen oder Schrägbohrungen, d.h. Bohrungen, die mit der Drehachse (Horizontalachse) des Werkstücks keinen rechten Winkel einschließen, bei der Bearbeitung ein gewisses Problem darstellen. Außerdem ist es in Spezialfällen, bei denen aufgrund der Werkstückgestaltung in einzelnen Arbeitsstationen unterschiedliche Bearbeitungszeiten erforderlich sind, möglich, dass die Bearbeitungseinheiten unterschiedlicher Arbeitsstationen unterschiedlich lange arbeiten. Die Taktzeit wird von der längsten erforderlichen Bearbeitungszeit bestimmt.

Aus der AT-A-302 768 ist eine Werkzeugmaschine mit einer Werkstückhalteeinrichtung bekannt, die mehrere Werkstücke aufnehmen kann. Die Werkstückhalteeinrichtung weist dazu einen zwischen zwei horizontal aufragenden Schenkeln gehaltenen Block und zwei außerhalb der Schenkel gehaltene Blöcke auf. Die Blöcke sind um eine horizontale Achse drehbar, um aufgenommene Werkstücke in unterschiedliche Bearbeitungspositionen zu bringen.

Aus dem Gebrauchsmuster G 90 14 605 U1 ist eine Drehmaschine mit mehreren dem gleichen Werkstück zugeordneten Bearbeitungseinheiten bekannt. Die Bearbeitungseinheiten sind an zwei gegenüberliegenden Seiten des Werkstücks unabhängig voneinander zu dem Werkstück zustellbar angeordnet.

Davon ausgehend ist es Aufgabe der Erfindung, hier abzuhelfen und eine Werkzeugmaschine zu schaffen, mit der auch bei Werkstücken, deren einzelne Seiten unterschiedlich lange bearbeitet werden müssen, ein möglichst unterbrechungsarmer Betrieb einzelner Arbeitsspindeln und somit eine hohe Auslastung möglich ist.

Diese Aufgabe wird durch die Werkzeugmaschine mit den Merkmalen des Patentanspruchs 1 gelöst.

Die erfindungsgemäße Werkzeugmaschine ermöglicht die Minimierung der Nebenzeiten der Maschine und eine gleichmäßige Auslastung der vorhandenen Arbeitsspindeln. In ihrer einfachsten Bauform weist die Maschine eine Bearbeitungseinheit auf, die zwei Werkstückaufnahmen bedient. Jede Werkstückaufnahme ist so ausgebildet, dass sie das Werkstück wenigstens in eine Bestückungs- oder Entnahmeposition sowie in wenigstens eine festgelegte, vorzugsweise aber in mehrere wahlweise festlegbare Arbeitspositionen schwenken kann. Die Schwenkachse verläuft dabei vorzugsweise quer durch das Werkstück und im Idealfall durch sein Zentrum. Vorzugsweise berührt oder schneidet die Schwenkachse die Werkstückaufspannfläche nicht, sondern verläuft im Abstand zu dieser etwa parallel.

Beide Werkstückaufnahmen sind in unmittelbarer Nachbarschaft zueinander angeordnet, und die Bearbeitungseinheit kann mittels der Führungs- und Verstelleinrichtung so verfahren werden, dass sie entweder das eine oder das andere Werkstück bearbeitet. Nachdem die zum Werkstückwechsel erforderliche Zeit in der Regel wesentlich kürzer ist als die Bearbeitungszeit, gelingt es somit, die Arbeitsspindel praktisch ständig arbeiten zu lassen. Inaktive Zeiten, wie sie ansonsten auftreten könnten, wenn auf andere Arbeitsspindeln oder bei Werkstückwechsel gewartet werden muß, können vermieden werden.

Während die Arbeitsspindel in Seitenrichtung entlang eines Weges verstellbar ist, der beide Werkstückaufnahmen überspannt, ist sie in einer zusätzlichen Richtung rechtwinklig zu der Seitenrichtung und zu ihrer Drehachse verstellbar. Außerdem ist sie in Richtung ihrer Drehachse verstellbar, um eine Zustellbewegung zu ermöglichen. Diese drei Achsen ermöglichen eine flexible Bearbeitung der Werkstücke.

Alle NC-Achsen (X-, Y-, und Z-Achse sowie Schwenkachse S und Verstellachse V) dienen der Positionierung bei der Werkstückbearbeitung. Damit erfolgt zugleich der Werkstücktransport aus der Beladeposition in die Arbeitsposition, so daß keine zusätzlichen Transportachsen/Bewegungen erforderlich sind. Bedarfsweise kann aber auch eine zusätzliche Transportachse vorgesehen werden.

Bei einer vorteilhaften Ausführungsform sind wenigstens zwei Bearbeitungseinheiten vorgesehen, deren Arbeitsspindeln, bspw. in einem rechten Winkel zueinander stehen. Beide Bearbeitungseinheiten sind in Seitenrichtung soweit verstellbar, dass sie abwechselnd beide Werkstücke bearbeiten können. Dabei können die Bearbeitungseinheiten sowohl an einem Werkstück, als auch an unterschiedlichen Werkstücken arbeiten. In Verbindung mit der möglichen Verschwenkung der Werkstücke um die Schwenkachse wird dadurch ein Ausgleich der für unterschiedliche Seiten möglicherweise unterschiedlich langen Bearbeitungszeiten möglich. Ist bspw. die Bearbeitung der Stirnfläche des Werkstücks, die seiner Aufspannfläche gegenüberliegt, besonders arbeitsintensiv, können dazu beide Bearbeitungseinheiten herangezogen werden. Während die erste Bearbeitungseinheit das erste Werkstück an seiner Stirnseite bearbeiten kann, kann die zweite Bearbeitungseinheit, die anders orientiert ist, das entsprechend geschwenkte andere Werkstück an seiner Stirnseite bearbeiten. Ist die Bearbeitung von Seitenflächen weniger arbeitsintensiv, kann diese bspw. von einer einzigen Bearbeitungseinheit übernommen werden, die dazu entsprechend seitlich zu dem einen oder dem anderen Werkstück verfahren wird.

Die Vorzüge der neuartigen Werkzeugmaschine treten insbesondere zu Tage, wenn die Arbeitsspindeln mit Revolverköpfen bspw. Kronenrevolvern versehen sind. Sind bei diesen Revolverköpfen die daran vorhandenen Spindeln, die jeweils für sich ein Werkzeug tragen, von der zentralen Arbeitsspindel her dauernd angetrieben und erfolgt das Weiterschalten des Kronenrevolvers bei laufenden Spindeln, werden extrem kurze Wechselzeiten erreicht, die geringer sind als eine Sekunde. Damit kann praktisch unterbrechungsfrei gearbeitet werden. Die hohe Flexibilität, die die erfindungsgemäße Werkzeugmaschine hinsichtlich der Aufteilung der einzelnen Arbeitsgänge auf einzelne Bearbeitungseinheiten und Werkzeuge bietet, ermöglicht es hier, dass die vorhandenen Arbeitsspindeln gleichmäßig ausgelastet werden und die Nebenzeiten der Maschinen sehr gering gehalten werden können.

Bei einer bevorzugten Ausführungsform sind die beiden Werkstückaufnahmen nebeneinander einander benachbart angeordnet, wobei die Schwenkachse horizontal orientiert ist. Dies hat den Vorzug, dass die Werkstücke jeweils in gleicher Höhe zu wechseln sind und dass ein flacher Maschinenrahmen verwendet werden kann, der auf unproblematische Weise steif ausgelegt werden kann. Dies kommt der Bearbeitungsgenauigkeit zugute.

Die beiden Bearbeitungseinheiten sind in vorzugsweise unterschiedlichen Raumrichtungen orientiert. Bspw. ist die erste Arbeitsspindel horizontal und die zweite Arbeitsspindel vertikal angeordnet. Dies ermöglicht es, dass beide Bearbeitungseinheiten zugleich an einem Werkstück arbeiten. Die Werkzeugmaschine kann dadurch sehr flexibel programmiert werden und es ist möglich, auch Werkstücke ohne Stillstand oder Leerlauf einzelner Arbeitsspindeln zu bearbeiten, die an verschiedenen Seiten sehr unterschiedliche Bearbeitungszeiten erfordern. Außerdem können die Arbeisspindeln aneinander vorbei gefahren werden, ohne miteinander zu kollidieren (bspw. die erste vom ersten zum zweiten Werkstück und die zweite vom zweiten zum ersten Werkstück).

Eine Höhenverstellung des Werkstücks bezüglich seiner Werkstückaufnahme, d.h. eine vorgesehene Verstellung des Abstandes des Zentrums des Werkstücks von der Werkstückaufnahme ermöglicht es, dass beim Schwenken unterschiedlich aufgespannter Werkstücke deren jeweiliges Zentrum auf der Schwenkachse bleibt. Dies vereinfacht nicht nur die Programmierung der Werkzeugmaschine, sondern vermindert darüberhinaus die erforderlichen Verfahrwege der Bearbeitungseinheit, was wiederum die Nebenzeiten vermindert.

Wenn die Werkstückaufnahme darüber hinaus eine Drehpositioniereinrichtung aufweist, mittels derer das Werkstück um eine Verstellachse rechtwinklig zu der Schwenkachse gedreht werden kann, ist mit der Werkzeugmaschine schon mit einer einzelnen Bearbeitungseinheit eine echte 5-Seiten-Bearbeitung möglich. Ist bspw. eine einzelne liegende Arbeitsspindel vorhanden, kann mit dem Werkzeug die Stirnfläche des Werkstücks bearbeitet werden, wenn es in horizontaler Schwenkposition ist, in der die Verstellachse horizontal orientiert ist, und es können die Seitenflächen bearbeitet werden, wenn das Werkstück so geschwenkt ist, dass die Verstellachse vertikal orientiert ist. Um so mehr kommt dieser Vorteil zum Tragen, wenn wenigstens zwei Bearbeitungseinheiten vorgesehen sind.

Die erfindungsgemäße Werkzeugmaschine ist besonders flexibel, wenn die Positioniereinheiten zum Verschwenken der Träger der Werkstückaufnahmen praktisch beliebig positionierbar sind. Bei einer solchen Werkzeugmaschine ist das Einbringen von Schrägbohrungen, das Bearbeiten von Schrägflächen und dgl. problemlos möglich, ohne dass dazu Winkelbohrköpfe oder ähnliche teure Spezialeinrichtungen erforderlich wären. Insbesondere können die Winkel der Schrägbohrungen oder Schrägflächen zu der Verstellachse der Werkstücke auf einfache Weise durch Programmieren der Werkzeugmaschine eingestellt werden. Zusätzliche Anbauten oder dgl. (Hardware) sind nicht erforderlich. Die Bearbeitungseinheiten führen bei jedem Bearbeitungsvorgang lediglich eine einfache Zustellbewegung parallel zu der Drehachse der Arbeitsspindel aus. Dies minimiert den Steueraufwand im Vergleich zu der Führung von Winkelbohrköpfen die eine gleichzeitige Verstellung zweier Achsen erfordern, um eine Vorschubbewegung zu erzielen. Dabei kann praktisch jede Bearbeitungsrichtung gewählt werden, was über die herkömmliche 5-Seiten-Bearbeitung hinausgeht.

Bedarfsweise kann die Werkzeugmaschine als Zwillingsmaschine mit zwei Werkstückaufnahmen und durchgehendem Maschinengestell aufgebaut werden. Es ist auch möglich, das Maschinengestell so werkstückaufnahmenweise aufzuteilen, so daß Einzeleinheiten mit jeweils einer Werkstückaufnahme erhalten werden. Diese sind dann kaskadierbar, so daß durch Verbinden zweier Einheiten miteinander eine Zwillingsmaschine und durch Verbindung dreier Einheiten miteinander eine Drillingsmaschine erhalten wird.

Der konstruktive Aufwand ist, wenn eine Werkzeugmaschine gemäß Patentanspruch 1 mit doppelten Aufspannplätzen und doppelten Spindeln versehen wird, deutlich geringer als der Aufbau der doppelten Anzahl von entsprechend kleineren Werkzeugmaschinen mit jeweils einzelnen Aufspannplätzen. Auch dies ergibt eine Kosteneinsparung.

Schliesslich ist eine Umrüstung vorhandener Werkzeugmaschinen möglich, indem auf vorhandene Aufspannplätze oder Träger doppelte oder mehrfache Werkstückaufspannplätze ggfs ohne Planetentische montiert werden. Gleiches gilt für die Spindeln, die mit entsprechenden Zusatzeinrichtungen gedoppelt werden können. Damit können in der Grundform auch zur Bearbeitung größerer komplizierter Werkstücke geeignete Werkzeugmaschinen auf die Zwillings- oder Mehrfachbearbeitung von kleineren Werkstücken umgerüstet werden, wodurch der Teilausstoss mit geringem Aufwand und ohne Qualitätseinbußen verdoppelt oder vervielfacht werden kann.

Die einzelnen Werkstückaufspannplätze können bedarfsweise mit separaten Drehpositioniereinrichtungen verbunden sein. Bei einer bevorzugten Ausführungsform weisen die Drehpositioniereinrichtungen jedoch einen gemeinsamen Antrieb auf, womit beide Aufspannplätze automatisch synchron bewegt werden. Die Verstellachsen der einzelnen Werkstückaufnahmeeinrichtungen sind dabei wie bei einer Werkzeugmaschine mit Einzelaufspannplätzen vorzugsweise rechtwinklig zu der Schwenkachse des Trägers festgelegt.

Die Bearbeitungseinheiten weisen vorzugsweise nicht lediglich ein einziges Spindelpaar, sondern einen mit mehreren Spindelpaaren bestückten Revolverkopf auf. Durch Drehung des Revolverkopfs wechseln die Spindeln paarweise ihre Position, die Bearbeitung der beiden an benachbarten Aufspannplätzen gehaltenen Werkstücke erfolgt deshalb vollständig synchron und gleichberechtigt. Der jeweils Zwillingsspindeln oder vier Spindeln je Revolverstation aufweisende Revolverkopf ist vorzugsweise ein Kronenrevolver. Die Spindeln können in einem an einem herkömmlichen Kronenrevolver aufzusetzenden Aufsatz gelagert sein, was die Umrüstung von Werkzeugmaschinen von Einfachspindel je Station auf Doppelspindel oder vier Spindeln erleichtert.

Die Werkzeugmaschine weist in ihrer bevorzugten Ausführungsform zwei Träger und zwei Bearbeitungseinheiten auf, deren Hauptachsen oder Arbeitsspindeln im rechten Winkel zueinander stehen. Hier gelten die bei einer Werkzeugmaschine mit einfachen (nicht doppelten) Spindeln und Werkstückaufnahmen vorhandenen Vorteile entsprechend.

Weitere vorteilhafte Einzelheiten ergeben sich aus Unteransprüchen, der nachfolgenden Beschreibung sowie der Zeichnungen. In der Zeichnung ist zur Veranschaulichung ein einzelnes Ausführungsbeispiel der Erfindung dargestellt. Es zeigen:
Fig. 1 die erfindungsgemäße Werkzeugmaschine in einer perspektivischen vereinfachten Darstellung, in der die äußere Maschinenabdeckung zum Zwecke der Veranschaulichung durchsichtig dargestellt ist;
Fig. 2 die Werkzeugmaschine nach Figur 1, in einem anderen Maßstab,
Fig. 2a die Werkzeugmaschine nach Figur 2, in einem anderen Betriebszustand,
Fig. 3 die Werkzeugmaschine nach den Figuren 1 und 2, in einer gleichen Arbeitsposition in perspektivischer Darstellung, aus einer anderen Raumrichtung gesehen,
Fig. 4 die Werkzeugmaschine nach den Figuren 1 bis 3, mit in abweichenden Arbeitspositionen befindlichen Bearbeitungseinheiten, dargestellt mit einer Blickrichtung, die mit den Figuren 1 und 2 übereinstimmt,
Fig. 4a die Werkzeugmaschine nach Figur 4, in einem anderen Betriebszustand, der sich durch die Schwenkstellungen der Werkstückaufnahmen von dem Betriebszustand nach Fig. 4 unterscheidet,
Fig. 4b die Werkzeugmaschine nach Figur 4, in einem weiteren Betriebszustand,
Fig. 5 die Werkzeugmaschine nach den Figuren 1 bis 4, mit in unterschiedliche Bearbeitungspositionen geschwenkten Werkstücken,
Fig. 6 die Werkzeugmaschine nach den Figuren 1 bis 5, in der in Figur 5 veranschaulichten Arbeitsposition aus einer anderen Blickrichtung,
Fig. 7 eine andere Ausführungsform der Werkzeugmaschine in einer perspektivischen Gesamtansicht, in der die Werkzeugmaschine zur Veranschaulichung schematisiert und teilweise durchsichtig dargestellt ist, mit einem Werkzeugträger in Ladeposition,
Fig. 8 die Werkzeugmaschine nach Figur 7, in einer perspektivischen schematisierten Ansicht, und mit beiden Werkstückträgern in Arbeitsposition, und

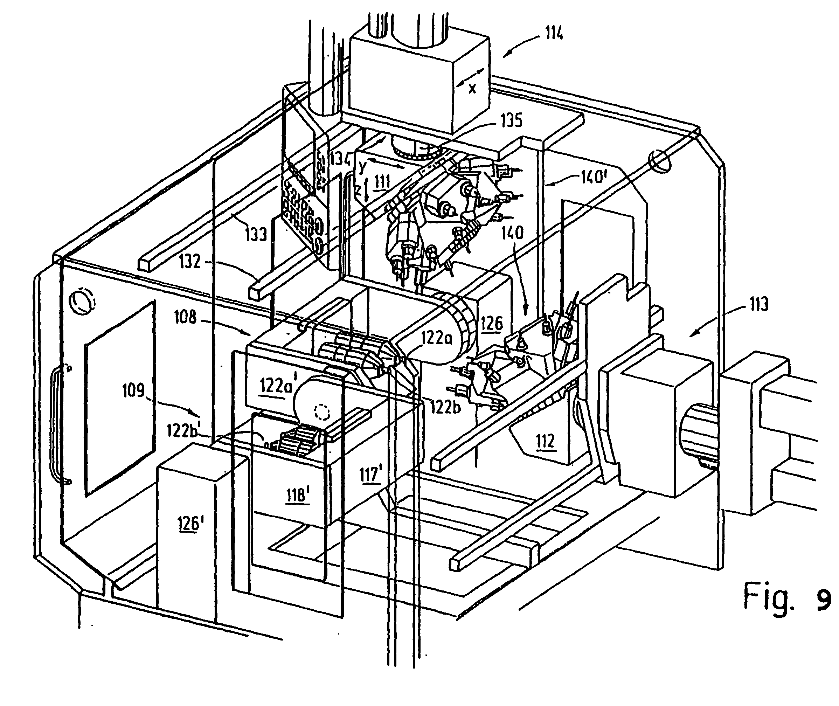

Fig. 9 die Werkzeugmaschine nach Figur 7, in der Arbeitsposition nach Figur 1, in einer anderen Perspektivansicht.

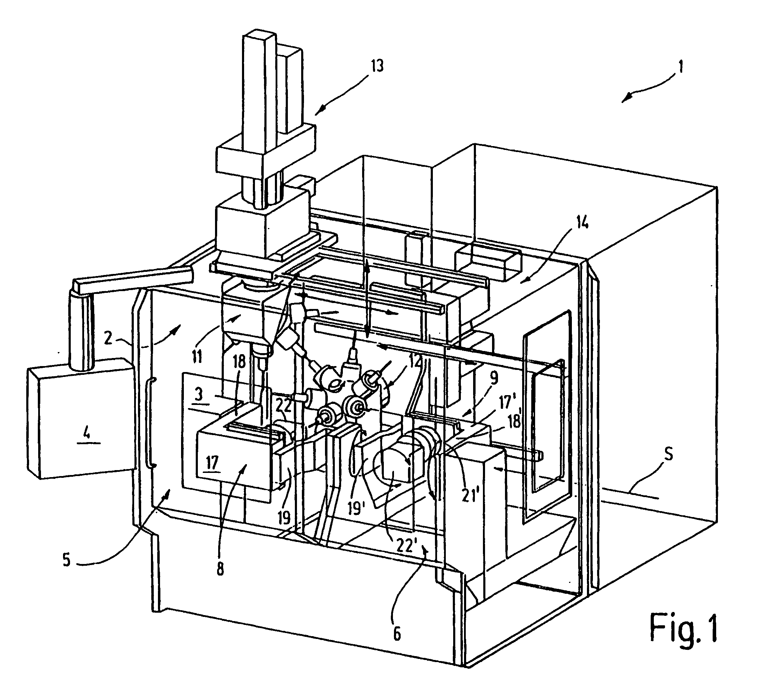

In Figur 1 ist eine Werkzeugmaschine 1 veranschaulicht, die einen von einem Gehäuse 2 umschlossenen Arbeitsraum 3 aufweist. Dieser ist von der Umgebung getrennt, und erforderliche Bedienelemente 4 sind außerhalb des Arbeitsraumes 3 angeordnet. An seiner Vorderseite ist das Gehäuse 2 mittels zweier Schwenk- oder Schiebetüren 5,6 bedarfsweise zu öffnen, um in den Arbeitsraum 3 zu gelangen. In diesem sind zwei Werkstückaufnahmen 8, 9 sowie Arbeitsspindeln 11, 12 angeordnet. Die Arbeitsspindeln 11, 12 gehören zu Bearbeitungseinheiten 13, 14, die entsprechende Antriebseinrichtungen für die Arbeitsspindeln 11, 12 umfassen.

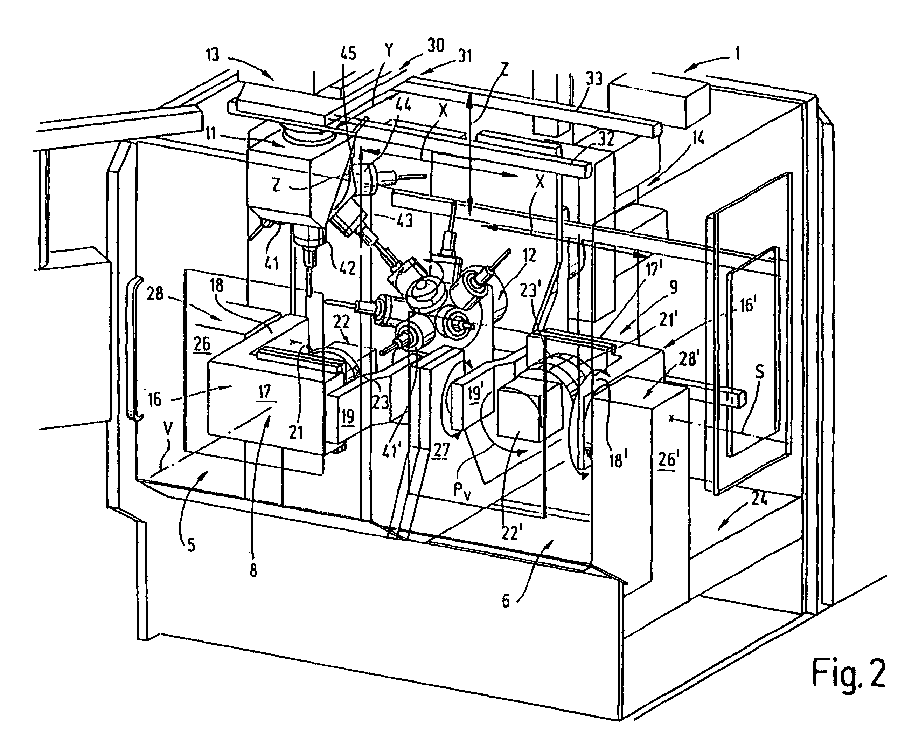

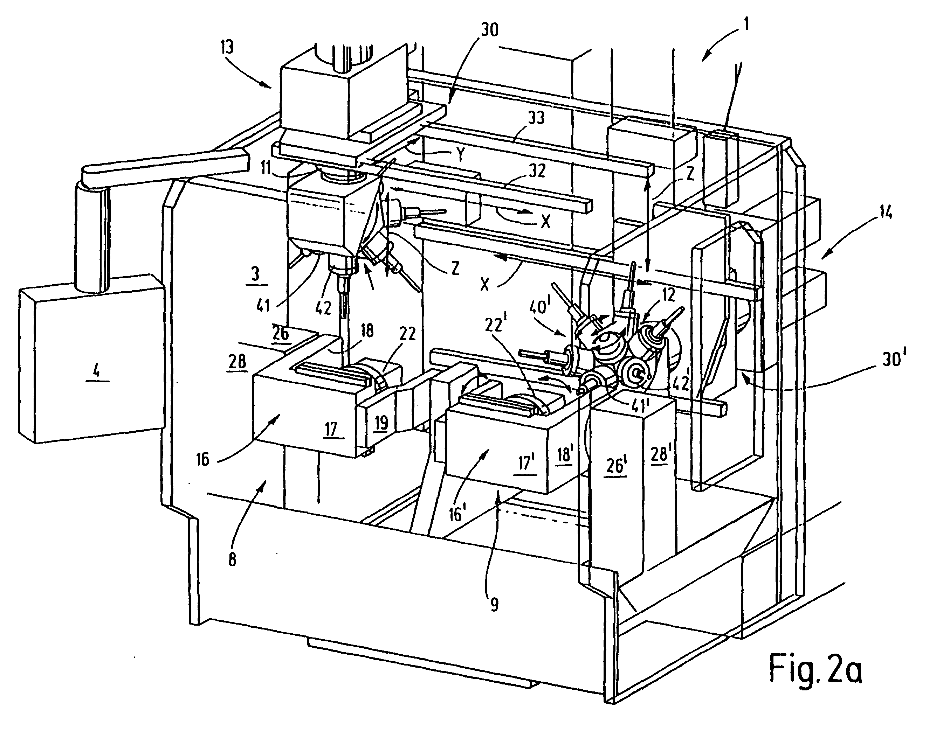

Aus der etwas größeren Darstellung in Figur 2 geht hervor, wie die Werkstückaufnahmen 8, 9 und die Arbeitsspindeln 11, 12 angeordnet und ausgebildet sind. Die Werkstückaufnahme 8 weist einen u-förmigen Träger 16 auf, an dessen Steg 17 zwischen zwei sich von dem Steg 17 wegerstreckenden Schenkeln 18, 19 eine Werkstückaufnahmeeinrichtung 21 angeordnet ist. Diese ist mit Spannmitteln zum lösbaren Halten eines Werkstücks 22 versehen. Darüberhinaus ist die Werkstückaufnahmeeinrichtung 21 so ausgebildet, dass sie das Werkstück 22 um eine Verstellachse V drehen kann, die sich parallel zu den Schenkeln 18, 19 erstreckt und rechtwinklig zu dem Steg 17 steht. Dazu dient eine zwischen dem Steg 17 und der Spanneinrichtung angeordnete Verstelleinrichtung 23. Die Drehung um die Verstellachse V ist in Figur 2 auf der rechten Seite im Zusammenhang mit der Werkstückaufnahme 9 durch einen Pfeil Pᵥ veranschaulicht.

Der gesamte Träger 16 ist um eine Schwenkachse S schwenkbar. Dazu sind die Schenkel 18, 19 des Trägers 16 an ihren von dem Steg 17 abliegenden Enden an einem Maschinengestell 24 gelagert, das zu diesem Zweck sich vertikal nach oben erstrekkende Säulen 26, 27 aufweist. In der Säule 26 ist eine Positioniereinheit 28 angeordnet, die eine Verschwenkung des Trägers 16 um wenigstens 90 vorzugsweise 180 oder mehr Grad gestattet. Außerdem ist die Positioniereinrichtung so ausgebildet, dass sie sowohl die in Figur 2 veranschaulichte Position festlegen kann, in der die Verstellachse V horizontal ausgerichtet ist, als auch andere festlegbare Positionen. Diese sind vorzugsweise fein abgestuft oder beliebig festlegbar. Die Positioniereinheit ist dazu mit einer NC-Achse versehen. Alternativ kommt auch eine Positioniereinheit in Frage, die mit einer Hirthverzahnung gekoppelt ist, die diskrete, eng beieinanderliegende vorgegebene Positionen definiert.

Die Werkstückaufnahme 9 ist bezüglich einer zwischen der Werkstückaufnahme 8 und der Werkstückaufnahme 9 gedachten vertikalen Mittelebene spiegelsymmetrisch zu der Werkstückaufnahme 8 ausgebildet, und stimmt ansonsten mit dieser überein. Ohne erneute Bezugnahme und Erläuterung werden deshalb die im Zusammenhang mit der Werkstückaufnahme 8 vergebenen Bezugszeichen bei der Werkstückaufnahme 9 verwendet, wobei sie zur Kenntlichmachung und Unterscheidung jeweils mit einem Apostroph versehen sind. Entsprechendes gilt für die Säule 26 und die Positioniereinheit 28. Zwischen den Werkstückaufnahmen 8, 9 ist eine feste oder bewegliche Trennwand 10 angeordnet, die insbesondere den Übertritt von Kühlmittel und Spänen zwischen den Werkstückaufnahmen 8, 9 unterbindet.

Weder der Werkstückaufnahme 8 noch der Werkstückaufnahme 9 ist eine der Bearbeitungseinheiten 13, 14 fest zugeordnet. Vielmehr sind diese für beide Werkstückaufnahmen 8, 9 gleichermaßen vorgesehen. Eine Führungs- und Verstelleinrichtung 30 ermöglicht dazu die gezielte Verstellung der Arbeitsspindel 11 in drei zueinander Bauweise rechtwinkligen Raumrichtungen X, Y, Z, wobei eine der Raumrichtungen mit der Drehachse übereinstimmt. Die Bearbeitungseinheit 13 ist dazu über eine Linearführung 31 geführt, deren Führungsschienen 32, 33 in Figur 2 schematisch angedeutet sind. Die Linearführung 32 gehört zu einer NC-Achse, die in Seitenrichtung X wirkt. Diese Richtung ist in Figur 2 durch einen Pfeil X veranschaulicht und parallel zu der Schwenkachse S orientiert. Die Arbeitsspindel 11 der Bearbeitungseinheit 13 ist zusätzlich in einer dazu rechtwinkligen Richtung Y verstellbar, wozu ebenfalls eine entsprechende Linearführung und eine NC-Achse dienen. Während jedoch der Verstellweg der Linearführung 31 in X-Richtung so groß ist, dass die Arbeitsspindel sowohl an das Werkstück 22 als auch an das Werkstück 22' herangeführt werden kann, ist der Verstellweg in Y-Richtung wesentlich kleiner. Hier genügt ein Verstellweg, der den Abmessungen des Werkstücks 22 entspricht.

Die Bearbeitungseinheit 13 weist zusätzlich eine weitere NC-Achse auf, mittels derer die Arbeitsspindel 11 in Z-Richtung verstellt werden kann. Die Z-Richtung ist rechtwinklig zu der X-Richtung und zu der Y-Richtung orientiert und somit rechtwinklig zu der Schwenkachse S. Die Z-Richtung bildet für die Arbeitsspindel 11 die Zustellrichtung.

An ihrem dem Werkstück 22 zugewandten Ende ist die Arbeitsspindel 11 mit einem als Kronenrevolver ausgebildeten Revolverkopf 40 versehen. Dieser weist mehrere Spindeln 41 bis 46 auf, deren Drehachsen auf einem gedachten Kegelmantel angeordnet sind. Der Revolverkopf 40 ist über eine nicht weiter dargestellte Einrichtung programmgesteuert um eine schräg orientierte Schaltachse in mehrere Arbeitspositionen drehbar, wobei in jeder Arbeitsposition eine der Spindeln 41 bis 46 mit der Arbeitsspindel 11 fluchtet. Alle Spindeln 41 bis 46 sind von der Arbeitsspindel 11 her angetrieben, und laufen unabhängig von der jeweiligen Schwenkposition mit. Jede Spindel 41 bis 46 ist mit einem Futter zur Aufnahme eines Werkzeugs zur spanenden Bearbeitung des Werkstücks 22 versehen. Das jeweils in Arbeitsposition befindliche Werkzeug dreht dabei jeweils um eine vertikale Drehachse, die mit der Arbeitsspindelachse übereinstimmt. Die anderen Werkzeuge gehen an dem Werkstück 22 vorbei und laufen somit leer.

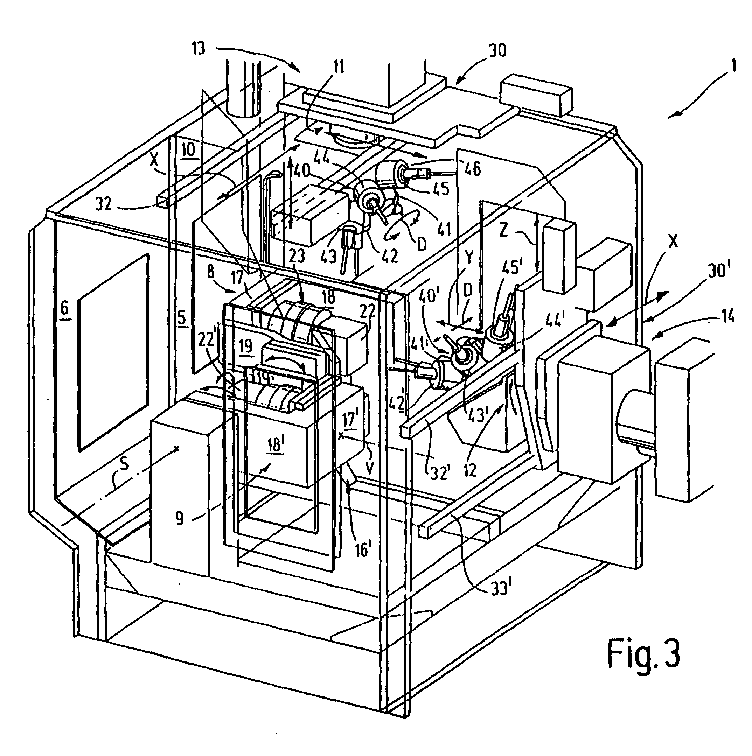

Wie insbesondere aus Figur 3 hervorgeht, ist die Arbeitsspindel 12 ebenfalls mittels dreier NC-Achsen in den Richtungen X, Y und Z verstellbar, während hier jedoch die Y-Richtung die Zustellrichtung bildet. Die Arbeitsspindel 12 ist horizontal in Y-Richtung orientiert. Linearführungen und Achsen der Bearbeitungseinheit 14 stimmen prinzipiell mit Führungen und Achsen der Bearbeitungseinheit 13 überein und sind somit mit gleichen Bezugszeichen versehen. Auch im übrigen sind die Bearbeitungseinheiten 13, 14 baugleich, und insbesondere ist die Arbeitsspindel 12 an ihrer im Werkstück 22 zugewandten Seite mit einem Revolverkopf 40' versehen, der mit dem Revolverkopf 40 der Bearbeitungseinheit 13 übereinstimmt, so dass dessen Beschreibung entsprechend gilt. Soweit die Elemente der Bearbeitungseinheit 14 mit denen der Bearbeitungseinheit 13 übereinstimmen, sind gleiche, zur Unterscheidung jeweils mit einem Apostroph versehene Bezugszeichen verwendet. Dabei ermöglicht jede Verstelleinrichtung 30, 30' somit eine Verstellung der jeweiligen Arbeitsspindel 11, 12 in Seitenrichtung X in einer zusätzlichen Verstellrichtung Y bzw Z und in einer Zustellrichtung Z bzw. Y.

Die Arbeitsweise der insoweit beschriebenen Werkzeugmaschine 1 ist wie folgt:

Als Beispiel wird angenommen, dass die Werkstückaufnahmen 8, 9 der Werkzeugmaschine 1 zunächst in der Figur 1 veranschaulichten Schwenkposition befindlich sind. Die Werkstückaufnahme 9 ist dabei so geschwenkt, dass der Steg 17' an der von der Tür 6 weg weisenden Seite der Schwenkachse S befindlich ist. Das Werkstück 22' ist von der Tür 6 her zugänglich. Es kann nun bspw. ein Werkstückwechsel erfolgen, indem das zuvor fertig bearbeitete Werkstück 22' entnommen und ein neuer Rohling in die Werkstückaufnahmeeinrichtung 21' eingesetzt wird.

Während die Werkstückaufnahme 9 in eine zum Werkstückwechsel geeignete Position geschwenkt ist, befindet sich die Werkstückaufnahme 8 in einer Arbeitsposition. Im speziellen sind beide U-förmigen Träger 16, 16' mit ihren Schenkeln 18, 19, 18', 19' waagerecht orientiert, wobei der Steg 17 der Werkstückaufnahme 8 zu der Tür 5 hinweist. Wie insbesondere aus den Figuren 2 und 3 hervorgeht, stehen beide Bearbeitungseinheiten 13, 14 bei der das Werkstück 22 haltenden Werkstückaufnahme 8. Weil die Arbeitsspindeln 11, 12 der Bearbeitungseinheit 13, 14 miteinander einen rechten Winkel einschliessen, können beide gleichzeitig aktiv sein. Bspw. wird mit dem Werkzeug der Spindel 42 eine Seitenfläche des lediglich beispielhaft als Würfel dargestellten Werkstücks 22 bearbeitet, während das Werkzeug der Spindel 41' seine Stirnseite bearbeitet. Das dabei jeweils gewünschte oder erforderliche Werkzeug wird durch Drehung des jeweiligen Revolverkopfs 40, 40' in Bearbeitungsposition gebracht. Die jeweilige Drehbewegung ist in Figur 3 durch Pfeile D angedeutet. Die Drehung der Revolverköpfe 40, 40' erfolgt ohne Stillstand der jeweiligen Arbeitsspindel 11, 12 die alle Spindeln des Revolverkopfs 40, 40' synchron antreibt.

Durch Drehung des Werkstücks 22, um seine Verstellachse V durch entsprechende Ansteuerung der Verstelleinrichtung 23 kann eine andere Seitenfläche nach oben gebracht und somit von der Bearbeitungseinheit 13 bearbeitet werden. Aufeinander folgend können so alle vier Seiten des Werkstücks 22 bearbeitet werden. Bedarfsweise können auch Zwischenpositionen eingestellt werden.

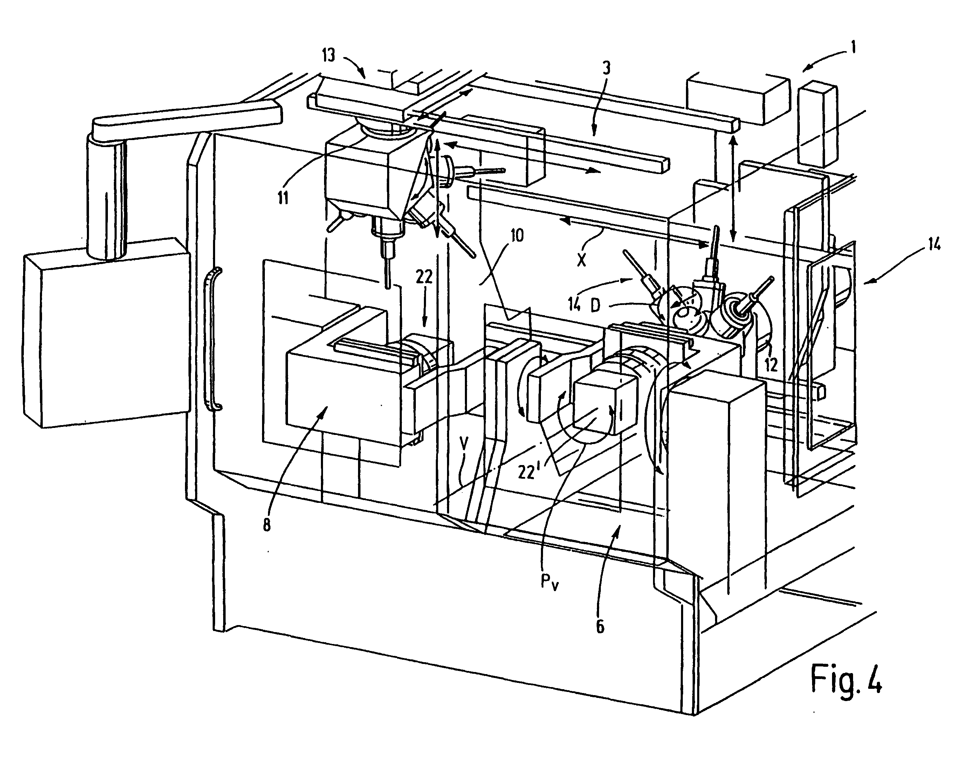

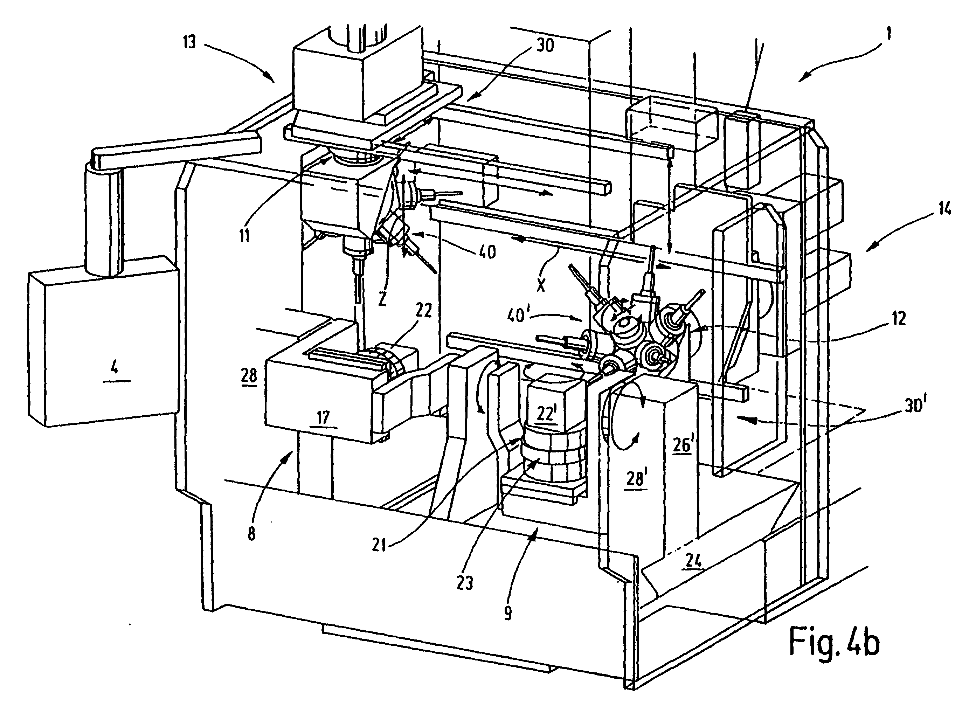

Die Werkzeugmaschine 1 gestattet eine gleichmäßige Auslastung der Bearbeitungseinheiten 13, 14. Erfordert das Werkstück 22 bspw. von jeder seiner fünf Seiten her eine ungefähr gleich lange Bearbeitungszeit und entspricht die Bearbeitungszeit einer Seite etwa der für den Werkstückwechsel erforderlichen Zeit, wird die Werkstückaufnahme 9 aus der in den Figuren 1 bis 3 dargestellten Werkstückwechselposition in eine Vertikalposition (Fig. 4b) geschwenkt, in der sich die Schenkel 18', 19' und somit die Verstellachse V des Werkstücks 22' in Vertikalrichtung erstrecken. Die Bearbeitungseinheit 14 wird nun in X-Richtung zu der Werkstückaufnahme 9 verfahren und kann eine erste Seitenfläche des Werkstücks 22' bearbeiten.

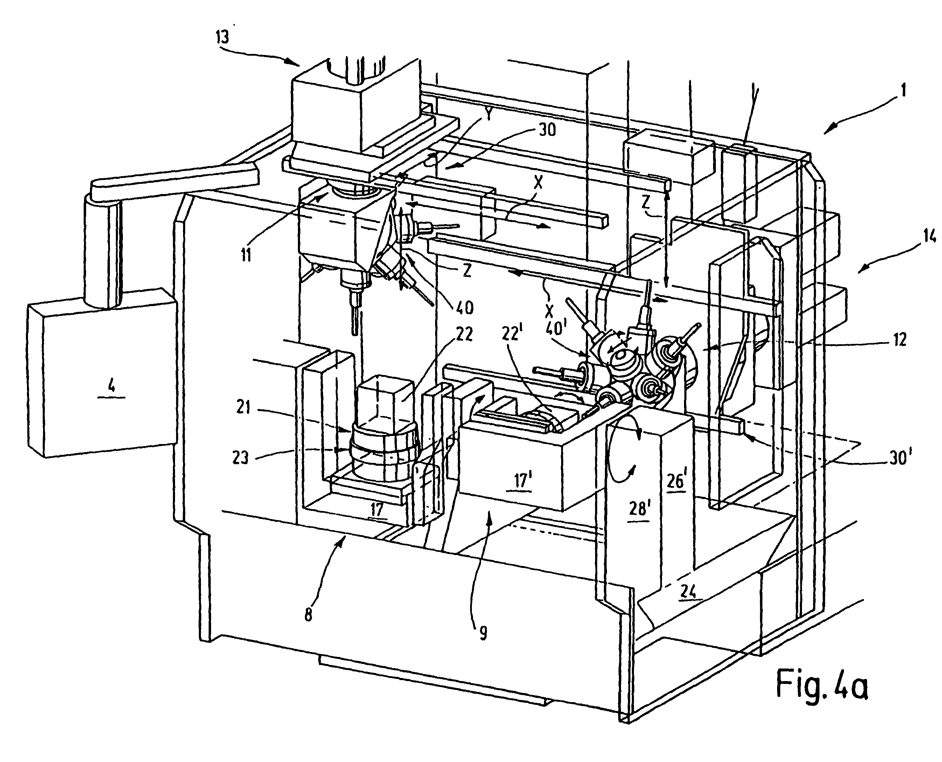

Ist dies erfolgt und das Werkstück 22 zwischenzeitlich fertig bearbeitet, kann die Werkstückaufnahme 9 in eine Horizontalposition geschwenkt werden, wie sie in Figur 2a veranschaulicht ist. (Wärenddessen kann die Werkstückaufnahme 8 auch vertikal geschwenkt werden, Fig. 4a.) In der Horizontalposition der Werkstückaufnahme 9 ist der Steg 17' auf der bei der Tür 6 liegenden Seite der Schwenkachse S gehalten. Während die Bearbeitungseinheit 14 nun die Stirnfläche des Werkstücks 22' bearbeiten kann, wird die Bearbeitungseinheit 13 zu dem Werkstück 22' herübergefahren und kann nacheinander die restlichen drei Seitenflächen bearbeiten. Somit entfallen auf die Bearbeitungseinheit 13 drei zu bearbeitende Flächen, während die Bearbeitungseinheit 14 zwei Flächen zu bearbeiten hat.

Dies gilt entsprechend für die Bearbeitung des Werkstücks 22 in der Werkstückaufnahme 8. Auch hier kann die Bearbeitung der Stirnfläche und der vier Seitenflächen so unter den Bearbeitungseinheiten 13, 14 aufgeteilt werden, dass beide Bearbeitungseinheiten 13, 14 praktisch dauernd aktiv sind. Nebenoder Verlustzeiten, in denen eine Arbeitsspindel 11 oder 12 im Leerlauf dreht, während sie letztlich darauf wartet, dass die jeweils andere Arbeitsspindel ihren Bearbeitungsvorgang beendet, können minimiert werden oder ganz wegfallen. Zur weiteren Angleichung der Bearbeitungszeiten ist es bspw. auch möglich, dass die Bearbeitungseinheit 13 bei der Werkstückaufnahme 9 drei Seitenflächen und die Werkstückaufnahme 14 eine Seitenund eine Stirnfläche bearbeitet, während die Verhältnisse bei der Werkstückaufnahme 8 gerade umgekehrt sind. Damit entfallen über beide Werkstücke 22 , 22' auf jede Bearbeitungseinheit 13, 14 gerechnet jeweils fünf zu bearbeitende Seiten.

Beide Werkstückaufnahmen 8, 9 sind voneinander unabhängig in beliebiger oder nahezu beliebige Positionen schwenkbar. Damit kann sichergestellt werden, dass ein Beladen einer Werkstückaufnahme 8 oder 9 die Arbeit an der jeweils anderen Werkstückaufnahme 9 oder 8 nicht stört. Im Gegensatz zu bekannten Rundtakt-Werkzeugmaschinen findet bei der Werkzeugmaschine 1 kein echter Werkstücktransport, d.h. keine Ortsvelagerung des Zentrums des jeweiligen Werkstücks 22, 22' statt. Vielmehr werden die Bearbeitungseinheiten 13, 14 zwischen den Werkstückaufnahmen 8, 9 hin und her bewegt. Die Bewegung jedes Werkstücks 22, 22' ist auf zwei überlagerte Dreh- oder Schwenkbewegungen, nämlich die Schwenkbewegung um die Schwenkachse S und die Verstellbewegung um die Verstellachse V beschränkt. Bei beiden Dreh- oder Schwenkbewegungen bleibt das Zentrum des jeweiligen Werkstücks 22, 22' im Wesentlichen am Platz. Die Bearbeitungseinheiten 13, 14 führen hingegen nur lineare Verstellbewegungen in drei Achsen X, Y, Z aus. Lediglich bedarfsweise kann noch eine zusätzliche Schwenkachse für die Bearbeitungseinheiten 13, 14 vorgesehen werden.

Die Schwenkbewegung der Werkstückaufnahmen 8, 9, die sowohl Transport- als auch Positionierbewegung für die Werkstükke 22, 22' ist, ermöglicht über das Einstellen unterschiedlicher Bearbeitungspositionen hinaus eine zweckmäßige Späneabfuhr. Beim Schwenken der Werkstücke 22, 22' in unterschiedliche Lagen können entstandene und angesammelte Späne nach unten fallen oder bei entsprechender Geschwindigkeit auch abgeschleudert werden.

Ist das Werkstück 22' fertig bearbeitet, wird es bspw. aus seiner Vertikallage heraus wieder auf die Tür 6 hin geschwenkt, wie aus Figur 4 hervorgeht, wobei die Bearbeitungseinheit 14 nun in X-Richtung seitlich zu der Werkstückaufnahme 8 und dem Werkstück 22 gefahren wird, um dort Bearbeitungsoperationen vorzunehmen. Das Werkstück 22' kann nun gewechselt werden. Um den Zugriff zu dem Werkstück 22' zu gestatten, während an dem Werkstück 22 gearbeitet wird, trennt die feste oder auch gesondert betätigbare Wand 10 den Arbeitsraum 3 in Halbräume.

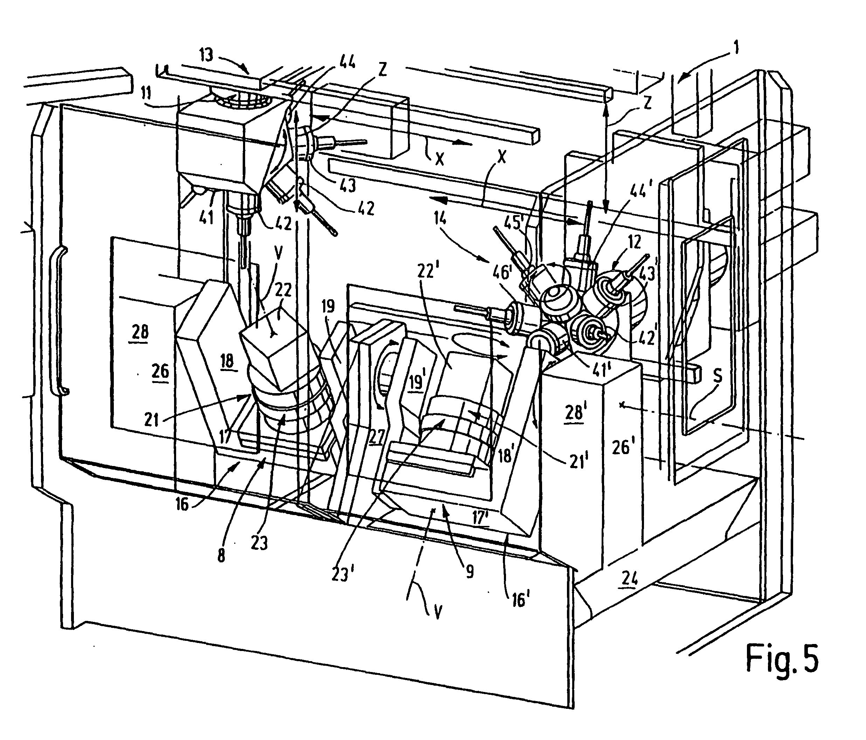

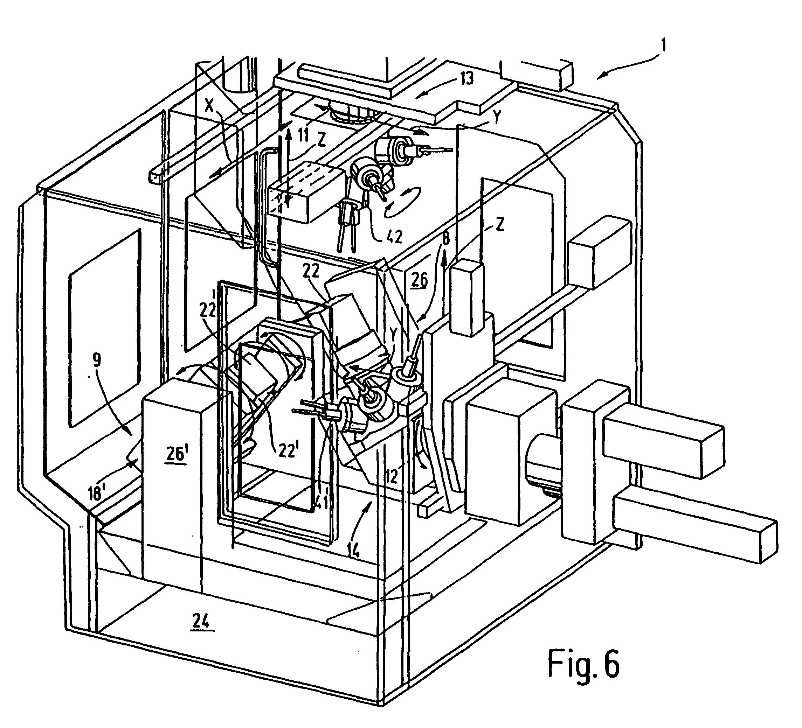

Die Werkzeugmaschine 1 ermöglicht nicht nur eine gleichmäßige Auslastung der Bearbeitungseinheiten 13, 14, sondern darüber hinaus eine sehr hohe Flexibilität hinsichtlich der Bearbeitung der Werkstücke 22, 22' aus unterschiedlichen Raumrichtungen heraus. Dies geht insbesondere aus den Figuren 5 und 6 hervor. Die Werkzeugmaschine 1 dient hier der Bearbeitung von relativ komplizierten Werkstücken, die bspw. Schrägbohrungen und/oder Schrägflächen aufweisen. Die Werkstückaufnahmen 8, 9 sind jeweils in Positionen geschwenkt, in denen die Verstellachsen V der Werkstücke 22, 22' mit der Vertikalen einen spitzen Winkel einschliessen. Ohne Zuhilfenahme von Schrägbohrköpfen oder anderweitige Mittel zur winkelmäßigen Verstellung der in den Spindeln 42, 41' gehaltenen Werkzeuge, werden auf diese Weise Schrägbohrungen erreicht und es können Schrägflächen gefräst werden.

Durch Verdrehung der Werkstücke 22, 22' um ihre jeweilige Verstellachse V mittels der Verstelleinrichtung 23, 23' können die Bearbeitungsrichtungen praktisch beliebig festgelegt werden. Sollen gewölbte oder sphärische Flächen bearbeitet werden, ist es darüber hinaus möglich die Werkstücke 22, 22' gezielt zu verstellen, während die jeweiligen Werkzeuge mit dem Werkstück 22, 22' im Eingriff stehen. Die Bewegungen der Positioniereinheiten 28, 28' und der Verstelleinheiten 23, 23' sind dabei unabhängig voneinander von der nicht weiter dargestellten elektronischen Steuereinheit gesteuert, die mit den Bedienelementen 4 verbunden ist. Damit stört das Herstellen von Schrägbohrungen und die Bearbeitung von Schrägflächen den Gesamtablauf der Bearbeitungsvorgänge nicht. Bearbeitet bspw. die Bearbeitungseinheit 13 eine Seitenfläche aus dazu rechtwinkliger Richtung, kann die andere Bearbeitungseinheit 14 an dem anderen Werkstück Schrägbearbeitungen vornehmen.

Soll die Werkzeugmaschinen 1 auf eine andere Werkstücksserie eingerichtet werden, werden die Werkstückaufnahmeeinrichtungen 21, 21' so auf die neuen Werkstücke eingestellt, dass deren jeweiliges Zentrum wenigstens näherungsweise auf der Schwenkachse S liegt. Dies wird erreicht, indem die Aufspannebene, die von der der Stirnseite gegenüberliegenden Fläche des Werkstücks 22, 22' definiert wird, in ihrer Höhe, d.h. in ihrem Abstand zu der Schwenkachse S verstellbar ist.

Die Werkzeugmaschine 1 gestattet es im Extremfall, auf den beiden Werkstückaufnahmen 8, 9 unterschiedliche Werkstücke zu bearbeiten. Bspw. kann die Werkstückaufnahme für einen ersten Werkstücktyp und die Werkstückaufnahme 9 für einen Werkstücktyp eingerichtet werden. Wenn die erforderlichen Bearbeitungszeiten der verschiedenen Seiten der beiden Werkstücktypen unterschiedlich sind, kann, weil jede Bearbeitungseinheit 13, 14 beide Werkstückaufnahmen 8, 9 bedient, hier häufig ein gewisser Ausgleich erreicht werden, so dass wiederum beide Bearbeitungseinheiten 13, 14 optimal ausgelastet werden.

Eine Werkzeugmaschine 1 weist wenigstens eine, vorzugsweise aber zwei Bearbeitungseinheiten 13, 14 auf, die zwei Werkstückaufnahmen 8, 9 zugeordnet sind. Die Bearbeitungseinheiten 13, 14 sind in drei Achsen X, Y, Z verstellbar, wobei sie jeweils beide Werkstückaufnahmen 8, 9 erreichen können. Die Bearbeitungseinheiten 13, 14 sind so orientiert, dass ihre Arbeitsspindel 11, 12 in einem vorzugsweise rechten Raumwinkel zueinander stehen. Sie können dadurch aneinander vorbeibewegt werden, ohne miteinander zu kollidieren. Außerdem können sie zugleich an einem Werkstück arbeiten. Die Werkstückaufnahmen sind unabhängig voneinander um eine vorzugsweise, aber nicht zwingend gemeinsame Schwenkachse S positionierbar. Außerdem sind die Werkstücke um eine zu der Schwenkachse rechtwinklige Achse V drehbar. Diese Anordnung ermöglicht eine flexible Bearbeitung der Werkstücke aus beliebigen Raumrichtungen heraus. Weil jede Bearbeitungseinheit 13, 14 prinzipiell jede Seite des Werkstücks jeder Werkstückaufnahme 8, 9 bearbeiten kann, können beide Bearbeitungseinheiten 13, 14 gleichmäßig ausgelastet werden. Leerlauf- und Verlustzeiten werden daduch minimiert.

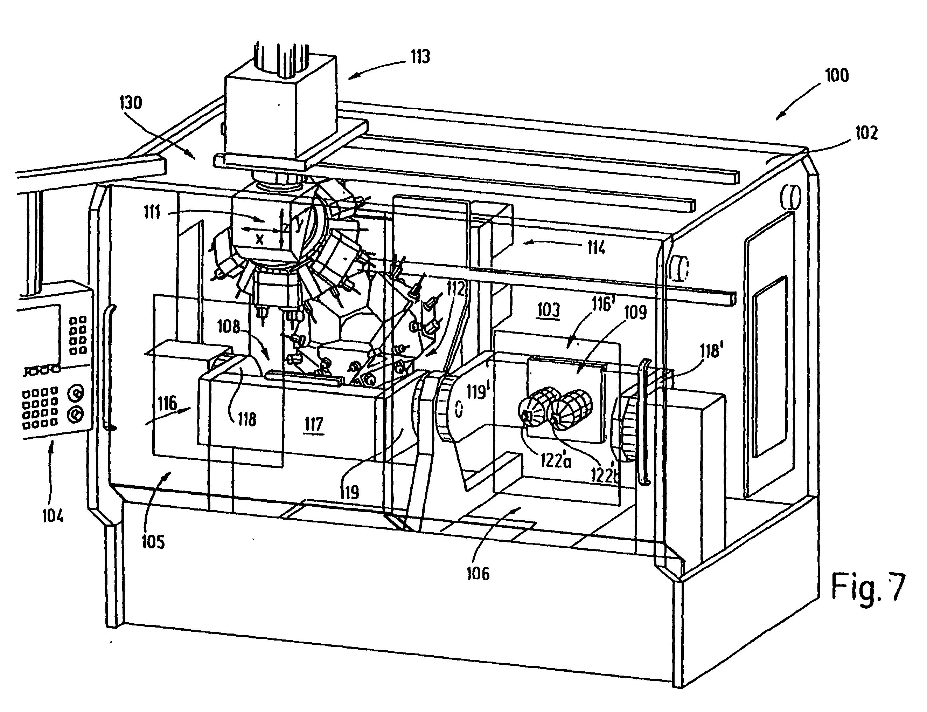

In Figur 7 ist eine Werkzeugmaschine 100 veranschaulicht, die im Wesentlichen der in Figur 1 veranschaulichten Werkzeugmaschine 1 entspricht. Sie weist einen von einem Gehäuse 102 umschlossenen Arbeitsraum 103 auf. Dieser ist von der Umgebung getrennt. Erforderliche Bedienelemente 104 sind außerhalb des Arbeitsraums 103 angeordnet. Das Gehäuse 102 ist an seiner Vorderseite wenigstens über die halbe, vorzugsweise jedoch über die gesamte Breite, mittels zweier Schwenk- oder Schiebetüren 105, 106 bedarfsweise zu öffnen. In dem Arbeitsraum 103 sind zwei Werkstückaufnahmen 108, 109 sowie Arbeitsspindeln 111, 112 angeordnet. Die Arbeitsspindeln 111, 112 gehören zu Bearbeitungseinheiten 113, 114, die entsprechende Antriebseinrichtungen für die Arbeitsspindeln 111, 112 enthalten. Die Werkstückaufnahme 108 weist einen U-förmigen Träger 116 auf, dessen Steg 117 zwischen zwei sich von dem Steg 117 weg erstreckenden Schenkeln 118, 119 an seiner zur Innenseite des Trägers 116 hin gelegenen Seite zwei Werkstückaufnahmeeinrichtungen 121a, 121b trägt. Beide Werkstückaufnahmeeinrichtungen 121a, 121b sind jeweils mit Spannmitteln zum lösbaren Halten von Werkstücken 122a, 122b versehen. Die Werkstückaufnahmeeinrichtungen 121a, 121b sind seitlich nebeneinander in einer Linie angeordnet, die parallel zu dem Steg 117 verläuft und die beide Schenkel 118, 119 schneidet.

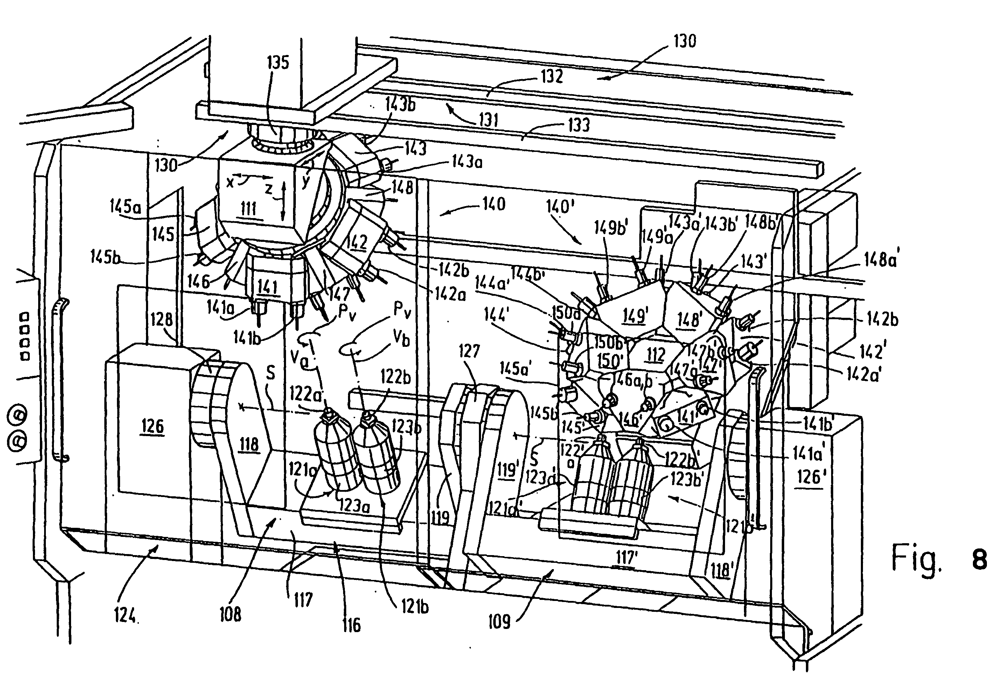

Die Werkstückaufnahmeeinrichtungen 121a, 121b sind jeweils mit einer Drehpositioniereinrichtung 123a, 123b versehen, über die das jeweilige Werkstück 122a, 122b um eine senkrecht auf dem Steg 17 stehende Verstellachse Va, Vb stufenlos oder in Stufen verdrehbar ist. Die Drehung um die Verstellachse Va bzw. durch die Verstellachse Vb ist in Figur 8 durch Pfeile Pv veranschaulicht. Die Werkstücke 122a, 122b können in eingestellten Drehpositionen fixiert werden.

Die Schenkel 118, 119 sind an ihrem jeweiligen freien Ende um eine Schwenkachse S verschwenkbar an einem Maschinengestell 124 gelagert. Dieses weist zur verschwenkbaren Halterung des Trägers 16 zwei zueinander parallele, sich vertikal nach oben erstreckende Säulen 126, 127 auf. Wenigstens in der oder an der Säule 126 ist eine Positioniereinheit 128 angeordnet, die eine Verschwenkung des Trägers 116 um wenigstens 90° vorzugsweise 180° oder mehr Grad gestattet. Außerdem ist die Positioniereinrichtung 128 so ausgebildet, dass sie sowohl fest vorgegebene, als auch vorzugsweise beliebige Zwischenpositionen festlegen kann. Die Positioniereinheit 128 kann dazu mit einer NC-Achse versehen oder mit einer Hirtverzahnung gekoppelt sein, die diskrete, eng beieinander liegende Positionen definiert.

Die Werkstückaufnahme 109 ist bezüglich einer zwischen der Werkstückaufnahme 108 und der Werkstückaufnahme 109 gedachten, vertikalen Mittelebene spiegelsymmetrisch zu der Werkstückaufnahme 108 ausgebildet und stimmt ansonsten mit dieser überein. Die Beschreibung gilt deshalb entsprechend, wobei lediglich zur Unterscheidung die Bezugszeichen der Einzelteile der Werkstückaufnahme 109 mit einem Apostroph versehen sind.

Die Bearbeitungseinheiten 113, 114 sind weder der Werkstückaufnahme 108 noch der Werkstückaufnahme 109 fest zugeordnet. Vielmehr sind sie seitlich so bewegbar, dass sie sowohl mit den Werkstücken 122a, 122b der Werkstückaufnahme 108 als auch mit den Werkstücken 122a',122b' der Werkstückaufnahme 109 in Arbeitseingriff gebracht werden können. Dazu dient eine Führungs- und Verstelleinrichtung 130, die eine gezielte seitliche Verstellung der Arbeitsspindel 111 in drei zueinander rechtwinkligen Raumrichtungen X, Y, Z. Die Raumrichtung X stimmt dabei mit der Schwenkachse S überein. Die Raumrichtung Z stimmt vorzugsweise mit der Drehachse der Arbeitsspindel 111 überein.

Dazu ist die Bearbeitungseinheit 113 über eine zu der Verstelleinrichtung 130 gehörende Linearführung 131 mit Führungsschienen 132, 133 geführt. Die Linearführung 131 wird durch eine NC-Achse in X-Richtung betätigt. Eine entsprechende Linearführung 134 und NC-Achse dienen der Verstellung der Bearbeitungseinheit 113 in Y-Richtung. Der Verstellweg in X-Richtung überstreicht beide Werkstückaufnahmen 108, 109, während der Verstellweg in Y- oder Z-Richtung deutlich geringer ist.

Die Z-Richtung wird ebenfalls über eine NC-Achse 135 betätigt und dient als Zustellrichtung.

Die Arbeitsspindel 111 ist an ihrer dem Werkstück 122a, 122b zugewandten Seite als Kronenrevolver ausgebildet, der einen Revolverkopf 140 aufweist. Der Revolverkopf 140 weist insgesamt zehn Spindelpaare 141 bis 150 auf, zu denen jeweils zwei Spindeln 141a, 141b bis 150a, 150b gehören. Alle Spindeln 141a bis 150b sind von der Arbeitsspindel 111 her angetrieben. Entsprechendes gilt für die Spindeln 141a' bis 150b', die von der Arbeitsspindel 112 her angetrieben sind. Die Abstände zwischen zwei zu einem Spindelpaar 141 bis 150 gehörigen Arbeitsspindeln 141a, 141b bis 150a, 150b stimmen alle mit dem Abstand zwischen den Verstellachsen Va, Vb der Werkstückaufnahme 108 bzw. 109 überein. Gegebenenfalls können an der Werkstückaufnahme 108, 109 Justiermittel vorgesehen sein, um dies fein einzustellen. Die Spindeln 141a, 141b bis 145a, 145b sind parallel zu einer gedachten Mittellinie angeordnet, die die Hauptrichtung des Spindelpaars 141 bis 145 definiert und in Arbeitsstellung der betreffenden Spindeln 141a, 141b bis 150a, 150b jeweils parallel zu den Verstellachsen Va, Vb gerichtet ist. Die Mittellinien liegen auf einem gedachten Kegel relativ großen Öffnungswinkels. Die übrigen Spindelpaare 146 bis 150 weisen Mittellinien auf, die auf dem Mantel eines Kegels mit weniger großer Öffnung angeordnet sind. Somit sind in Umfangsrichtung des Revolverkopfs 140 die Spindelpaare 140 bis 150 jeweils abwechselnd auf dem inneren oder dem äußeren Kegel angeordnet. Dieses Konstruktionsprinzip kann auch bei Revolverköpfen Anwendung finden, die anstelle der Spindelpaare Einfachspindeln oder vier Spindeln aufweisen.

An den Spindeln 141a bis 150b sind Werkzeuge angeordnet, wobei jeweils an zwei zu einem Spindelpaar 141 bis 150 gehörigen Spindeln gleiche Werkzeuge angeordnet sind.

Die Revolverköpfe 140, 140' sind untereinander baugleich, so dass die Beschreibung entsprechend gilt. Lediglich zur Unterscheidung sind die Bezugszeichen des Revolverkopfs 140' mit einem Apostroph versehen.

Die Arbeitsweise der insoweit beschriebenen Werkzeugmaschine 100 ist wie folgt:

Es wird angenommen, dass die Bearbeitungseinheiten 113, 114 und die Werkstückaufnahmen 108, 109 der Werkzeugmaschine 100 zunächst die in Figur 1 dargestellte Position einnehmen. Beide Bearbeitungseinheiten 113, 114 befassen sich mit den in der Werkstückaufnahme 108 angeordneten Werkstücken. Die Werkstückaufnahme 109 ist zugänglich. Die Tür 106 kann geöffnet werden und es können die Werkstücke 122a', 122b' gewechselt werden. Dazu steht der Träger 116' der Werkstückaufnahme 109 in Horizontalposition, d.h., seine Schenkel 118', 119' sind horizontal. Zum Werkstückwechsel kann der Werkstückträger 116' auch vertikal stehen.

Der Werkstückträger 116 befindet sich in einer zur Bearbeitung seiner Werkstücke 122a, 122b geeigneten Schwenkposition. Dies kann beispielsweise die in Figur 1 veranschaulichte Horizontalposition sein. Beide Bearbeitungseinheiten 113, 114 können aktiv sein. Sobald der Werkstückwechsel an der Werkstückaufnahme 109 beendet ist, kann, wie aus Figur 2 hervorgeht, eine der Bearbeitungseinheiten, im vorliegenden Fall die Bearbeitungseinheit 114, zu der Werkstückaufnahme 109 verfahren werden. Es kann nun die Bearbeitung der Werkstücke 122a', 122b' unter dem entsprechendem Winkel mit den gewünschten Werkzeugen vorgenommen werden. Bedarfsweise kann auch die Bearbeitungseinheit 113 zu der Werkstückaufnahme 109 verfahren werden, so dass nur diese oder auch beide Bearbeitungseinheiten 113, 114 an der Werkstückaufnahme 109 arbeiten. In diesem Fall ist die Werkstückaufnahme 108 für den Werkzeugstückwechsel frei. Durch Drehung der Werkstücke um die Verstellachse Va, Vb, sowie durch Verschwenkung um die Schwenkachse S, können die Werkstücke 122a, 122b; 122a', 122b' in die erforderlichen Bearbeitungspositionen gebracht werden, wobei eine echte 5-Seiten-Bearbeitung mit jeder Bearbeitungsstation möglich ist. Die Bearbeitung der Werkstücke 122a, 122b; 122a', 122b' erfolgt durch die Spindeln der Spindelpaare 141 bis 150 synchron, so dass in der Taktzeit für ein Werkstück jeweils zwei Werkstücke fertig werden.

Der Wechsel des jeweils aktiven Werkzeugs erfolgt durch Drehung des Revolverkopfs 140, 140' wobei das jeweils gewünschte Spindelpaar in Aktivposition gebracht wird, in der die Drehachsen mit der ZX- bzw. Y-Achse, d.h. den Achsen der Arbeitsspindeln 111, 112 fluchten. Die Drehung des Revolverkopfs erfolgt bei laufender Arbeitsspindel 111, 112, d.h., bei laufenden Spindeln 141a bis 150b.

## Patentansprüche

1. Werkzeugmaschine (1), insbesondere zur spanenden Bearbeitung von Werkstücken (22, 22'),
mit wenigstens zwei Vorrichtungen (8, 9) zur Werkstückaufnahme, die jeweils wenigstens einen um eine Schwenkachse (S) schwenkbar gelagerten Träger (16, 16', 116, 116') aufweisen, der mit einer Werkstückaufnahmeeinrichtung (21, 21') versehen ist,
wobei jedem Träger (16, 16', 116, 116') eine Positioniereinheit (23, 23') zugeordnet ist, mittels der der Träger (16, 16') um die Schwenkachse (S) in unterschiedliche Positionen verschwenkbar und in der jeweiligen Position fixierbar ist,
mit wenigstens einer ersten Bearbeitungseinheit (13), die wenigstens eine um eine Drehachse drehend antreibbare erste Arbeitsspindel (11) aufweist, die mit wenigstens einer Werkzeugaufnahme (41) versehen ist,
mit einer ersten Führungs- und Verstelleinrichtung (30), mittels der die Arbeitsspindel (11) wenigsten in einer zu der Drehachse übereinstimmenden Zustellrichtung (Z) und in einer parallel zu der Schwenkachse (S) orientierten Seitenrichtung (X) verstellbar ist,
wobei der Verstellweg der Führungs- und Verstelleinrichtung (30) in Seitenrichtung (X) parallel zu der Schwenkachse (S) so lang bemessen ist, dass ein von der Werkzeugaufnahme (41) gehaltenes Werkzeug wahlweise mit den Werkstücken (22, 22') der beiden Werkstückaufnahmen (8, 9) in Eingriff bringbar ist,
mit einer zweiten Bearbeitungseinheit (14), die wenigstens eine um eine Drehachse drehend antreibbare zweite Arbeitsspindel (12) aufweist, die mit wenigstens einer Werkzeugaufnahme (41') versehen ist,
mit einer zweiten Führungs- und Verstelleinrichtung (30'), mittels derer die zweite Arbeitsspindel (12) wenigsten in einer mit der Drehachse übereinstimmenden Zustellrichtung (Y) und in einer parallel zu der Schwenkachse (S) orientierten Seitenrichtung (X) verstellbar ist,
wobei der Verstellweg der zweiten Führungs- und Verstelleinrichtung (30') in Seitenrichtung (X) parallel zu der Schwenkachse (S) so lang bemessen ist, dass ein von der Werkzeugaufnahme gehaltenes Werkzeug wahlweise mit beiden Werkstücken (22, 22') der beiden Werkstückaufnahmen (8, 9) in Eingriff bringbar ist,
und wobei die Zustelleinrichtungen (Y, Z) der Bearbeitungseinheiten (13, 14) so im Winkel zueinander stehen, dass die Bearbeitungseinheiten (13, 14) unabhängig von einander in Seitenrichtung (X) verstellbar sind.

2. Werkzeugmaschine nach Anspruch 1, **dadurch gekennzeichnet, dass** der Verstellweg (X) der ersten Führungs- und Verstelleinrichtung (30) rechtwinklig zu der Zustellrichtung (Z) orientiert ist und dass die erste Arbeitsspindel (11) mittels der ersten Führungs- und Verstelleinrichtung (30) in einer zusätzlichen Verstellrichtung (Y) verstellbar ist, die vorzugsweise sowohl zu der Seitenrichtung (X) als auch zu der Zustellrichtung (Z) rechtwinklig orientiert ist.

3. Werkzeugmaschine nach Anspruch 1, **dadurch gekennzeichnet, dass** der Verstellweg der zweiten Führungs- und Verstelleinrichtung (30') vorzugsweise rechtwinklig zu der Zustellrichtung (Y) orientiert und die zweite Arbeitsspindel (12) mittels der zweiten Führungs- und Verstelleinrichtung (30') in einer zusätzlichen Verstellrichtung (Z) verstellbar ist, die vorzugsweise sowohl zu der Seitenrichtung (X) als auch zu der Zustellrichtung (Y) rechtwinklig orientiert ist.

4. Werkzeugmaschine nach Anspruch 1, **dadurch gekennzeichnet,**
**dass** jeder Träger (116, 116') zwei Werkstückaufnahmeeinrichtungen (121a, 121b) aufweist und
**dass** wenigstens die erste Bearbeitungseinheit (113) wenigstens ein Spindelpaar (141) aufweist, zu dem die Spindel (141a) und wenigstens eine weitere Spindel (141b) gehören.

5. Werkzeugmaschine nach Anspruch 4, **dadurch gekennzeichnet, dass** jede Arbeitsspindel (11, 12) jeweils mit einem Revolver (40,.40') versehen ist, der mehrere angetriebene Spindeln (41, 42, 43, 44, 45, 46; 41', 42', 43', 44', 45', 46) aufweist, die jeweils gesonderte Werkzeuge tragen, wobei die Drehachsen der Arbeitsspindeln (11, 12) in unterschiedlichen Richtungen, vorzugsweise rechtwinklig zueinander orientiert sind.

6. Werkzeugmaschine nach Anspruch 1, **dadurch gekennzeichnet, dass** die Träger (16, 16') der Werkstückaufnahme (8, 9) U-förmig ausgebildet und nebeneinander angeordnet sind und zwei endseitig jeweils über einen Steg (17, 17') verbundene Schenkel (18, 19; 18', 19') aufweisen, an dem die Werkstückaufnahmeeinrichtung (21, 21') angeordnet ist, und dass die von dem Steg (17, 17') abliegenden Enden der Schenkel (18, 19; 18', 19') mit der die Schwenkachse (S) definierenden Positioniereinheit (28, 28') verbunden sind, wobei die Schwenkachsen (S) beider Träger (16, 16') miteinander übereinstimmen.

7. Werkzeugmaschine nach Anspruch 1, **dadurch gekennzeichnet, dass** die Werkstückaufnahmeeinrichtung (21, 21', 121a, 121b) eine Drehpositioniereinrichtung (23, 23') aufweist, mittels derer das gespannte Werkstück (22, 22') um eine Verstellachse (V) gezielt verstellbar ist, die zu der Schwenkachse (S) vorzugsweise rechtwinklig ausgerichtet ist und die Schwenkachse (S) schneidet.

8. Werkzeugmaschine nach Anspruch 7, **dadurch gekennzeichnet, dass** die Werkstückaufnahmeeinrichtung (21, 21') eine Aufspannebene festlegt, deren Abstand zu der Schwenkachse (S) einstellbar ist.

9. Werkzeugmaschine nach Anspruch 2, **dadurch gekennzeichnet, dass** die Drehpositioniereinrichtungen (123a, 123b) synchron zueinander betätigbar sind.

10. Werkzeugmaschine nach Anspruch 9, **dadurch gekennzeichnet, dass** die Drehpositioniereinrichtungen (123a, 123b) einen gemeinsamen Antrieb aufweisen.

11. Werkzeugmaschine nach Anspruch 2, **dadurch gekennzeichnet, dass** die Spindeln (141a bis 150b) jedes Spindelpaars (141 bis 150) synchron angetrieben sind, wobei die Spindeln (141a, 141b; 141'a, 141'b) jedes Spindelpaars (141, 141') vorzugsweise eine gemeinsame Antriebsquelle (111, 112) aufweisen.

12. Werkzeugmaschine nach Anspruch 1 oder 7, **dadurch gekennzeichnet, dass** die Spindeln (141a, 141b; 141'a, 141'b) als Paare jeweils an einem Revolver (140, 140') vorgesehen sind, der mehrere angetriebene Spindeln (141a bis 150b; 141a' bis 150b') aufweist, die jeweils gesonderte Werkzeuge tragen, wobei die Spindeln (141a, 150b) der Spindelpaare (141 bis 150) jeweils parallel zu einer mittig zwischen ihnen liegenden Mittellinie angeordnet sind, die auf dem Mantel eines gedachten Kegels liegt.

13. Werkzeugmaschine nach Anspruch 12, **dadurch gekennzeichnet, dass** die Spindeln (141a bis 150b) der Spindelpaare (141 bis 150) jeweils parallel zu einer mittig zwischen ihnen liegenden Mittellinie angeordnet sind, die abwechselnd auf dem Mantel eines gedachten Kegels mit größerem Öffnungswinkel und eines gedachten Kegels mit kleinerem Öffnungswinkel liegt.

## Claims

1. Machine tool (1), in particular for machining work pieces (22, 22'),
with at least two devices (8, 9) to receive work pieces, said devices respectively having at least one holder (16, 16', 116, 116') disposed to swivel around a swivel axis (S) and provided with a work piece receiving means (21, 21'),
wherein each holder (16, 16', 116, 116') has an associated positioning unit (23, 23'), by means of which the holder (16, 16') can be swivelled around the swivel axis (S) into different positions and can be fixed in the respective position,
with at least one first machining unit (13), which has at least one first work spindle (11), which may be driven to rotate around a rotational axis and is provided with at least one tool holder (41),
with a first guide and adjusting means (30), by means of which the work spindle (11) is adjustable at least in one feed direction (Z) consistent with the rotational axis and in a lateral direction (X) oriented parallel to the swivel axis (S),
wherein the dimension of the adjustment path of the guide and adjusting means (30) in lateral direction (X) parallel to the swivel axis (S) is so long that a tool held by the tool holder (41) may be selectively brought into engagement with the work pieces (22, 22') of the two work piece receiving devices (8, 9),
with a second machining unit (14), which has at least one first work spindle (12), which may be driven to rotate around a rotational axis and is provided with at least one tool holder (41'),
with a second guide and adjusting means (30'), by means of which the second work spindle (12) is adjustable at least in one feed direction (Y) consistent with the rotational axis and in a lateral direction (X) oriented parallel to the swivel axis (S),
wherein the dimension of the adjustment path of the second guide and adjusting means (30') in lateral direction (X) parallel to the swivel axis (S) is so long that a tool held by the tool holder may be selectively brought into engagement with both work pieces (22, 22') of the two work piece receiving devices (8, 9),
and wherein the feed directions (Y, Z) of the machining units (13, 14) are at an angle to one another such that the machining units (13, 14) are adjustable in lateral direction (X) independently of one another.

2. Machine tool according to Claim 1, **characterised in that** the adjustment path (X) of the first guide and adjusting means (30) is oriented at right angles to the feed direction (Z), and that by means of the first guide and adjusting means (30) the first work spindle (11) is adjustable in an additional adjustment direction (Y), which is preferably oriented at right angles both to the lateral direction (X) and to the feed direction (Z).

3. Machine tool according to Claim 1, **characterised in that** the adjustment path of the second guide and adjusting means (30') is preferably oriented at right angles to the feed direction (Y) and by means of the second guide and adjusting means (30') the second work spindle (12) is adjustable in an additional adjustment direction (Z), which is preferably oriented at right angles both to the lateral direction (X) and to the feed direction (Y).

4. Machine tool according to Claim 1, **characterised in that**
each holder (116, 116') has two work piece receiving means (121a, 121b) and
that at least the first machining unit (113) has at least one spindle pair (141), to which the spindle (141a) and at least one further spindle (141b) belong.

5. Machine tool according to Claim 4, **characterised in that** each work spindle (11, 12) is respectively provided with a turret (40, 40'), which has several driven spindles (41, 42, 43, 44, 45, 46; 41', 42', 43', 44', 45', 46'), which respectively hold separate tools, wherein the rotational axes of the work spindles (11, 12) are oriented in different directions, preferably at right angles to one another.

6. Machine tool according to Claim 1, **characterised in that** the holders (16, 16') of the work piece receiving device (8, 9) are U-shaped and arranged next to one another and have two legs (18, 19; 18', 19'), which are respectively connected at the ends via a web (17, 17') and on which the work piece receiving means (21, 21') is disposed, and that the ends of the legs (18, 19; 18', 19') remote from the web (17, 17') are connected to the positioning unit (28, 28') defining the swivel axis (S), wherein the swivel axes of both holders (16, 16') are the same.

7. Machine tool according to Claim 1, **characterised in that** the work piece receiving means (21, 21', 121a, 121b) has a rotary positioning means (23, 23'), by means of which the clamped work piece (22, 22') is adjustable in a defined manner around an adjustment axis (V), which is preferably oriented at right angles to the swivel axis (S) and intersects the swivel axis (S).

8. Machine tool according to Claim 7, **characterised in that** the work piece receiving means (21, 21') determines a clamping plane, the distance of which from the swivel axis (S) is adjustable.

9. Machine tool according to Claim 2, **characterised in that** the rotary positioning means (123a, 123b) may be operated synchronously with one another.

10. Machine tool according to Claim 9, **characterised in that** the rotary positioning means (123a, 123b) have a common drive.

11. Machine tool according to Claim 2, **characterised in that** the spindles (141a to 150b) of each spindle pair (141 to 150) are driven synchronously, wherein the spindles (141a, 141b; 141'a, 141'b) of each spindle pair (141, 141') preferably have a common drive source (111, 112).

12. Machine tool according to Claim 1 or 7, **characterised in that** the spindles (141a, 141b; 141'a, 141'b) are provided in pairs respectively on one turret (140, 140'), which has several driven spindles (141a to 150b; 141a' to 150b'), which hold respectively separate tools, wherein the spindles (141a, 150b) of the spindle pairs (141 to 150) are respectively arranged parallel to a centre line lying centrally between them, which lies on the envelope of an imaginary cone.

13. Machine tool according to Claim 12, **characterised in that** the spindles (141a to 150b) of the spindle pairs (141 to 150) are respectively arranged parallel to a centre line lying centrally between them, which alternately lies on the envelope of an imaginary cone with a larger generating angle and of an imaginary cone with a smaller generating angle.

## Revendications

1. Machine-outils (1), en particulier pour l'usinage par enlèvement de copeaux de pièces mécaniques (22, 22'),
avec au moins deux dispositifs (8, 9) pour recevoir des pièces, qui présentent chacun au moins un support (16, 16', 116, 116') monté pivotant autour d'un axe de pivotement (S) et équipé d'un dispositif porte-pièce (21, 21'),
à chaque support (16, 16', 116, 116') étant associée une unité de positionnement (23, 23'), à l'aide de laquelle le support (16, 16') peut être amené dans différentes positions par pivotement autour de l'axe de pivotement (S) et immobilisé dans la position voulue,
avec au moins une première unité d'usinage (13) qui présente au moins une première broche de travail (11) entraînée en rotation autour d'un axe de rotation, qui est pourvue d'au moins un porte-outil (41),
avec un premier dispositif de guidage et de déplacement (30), à l'aide duquel la broche de travail (11) peut être déplacée au moins dans une direction d'avance (Z) qui coïncide avec l'axe de rotation et dans une direction latérale (X) orientée parallèlement à l'axe de pivotement (S),
la course de déplacement du dispositif de guidage et de déplacement (30) dans la direction latérale (X) parallèle à l'axe pivotement (S) ayant une longueur telle qu'un outil tenu dans le porte-outil (41) puisse être amené en prise de manière sélective avec les pièces (22, 22') à usiner des deux porte-pièces (8, 9),
avec au moins une première unité d'usinage (13) qui présente au moins une première broche de travail (11) entraînée en rotation autour d'un axe de rotation, qui est pourvue d'au moins un porte-outil (41),
avec un premier dispositif de guidage et de déplacement (30) à l'aide duquel la broche de travail (11) peut être déplacée au moins dans une direction d'avance (Z) qui concorde avec l'axe de rotation et dans une direction latérale (X) orientée parallèlement à l'axe de pivotement (S),
la course de déplacement du dispositif de guidage et de déplacement (30) dans la direction latérale (X), parallèlement à l'axe pivotement (S), ayant une longueur telle, qu'un outil tenu dans le porte-outil (41) puisse être amené en prise de manière sélective avec les pièces (22, 22') à usiner des deux porte-pièces (8, 9),
avec au moins une deuxième unité d'usinage (14), qui présente au moins une deuxième broche de travail (12) entraînée en rotation autour d'un axe de rotation, qui est pourvue d'au moins un porte-outil (41'),
avec un deuxième dispositif de guidage et de déplacement (30'), à l'aide duquel la deuxième broche de travail (12) peut être déplacée au moins dans une direction d'avance (Y) qui concorde avec l'axe de rotation et dans une direction latérale (X) orientée parallèlement à l'axe de pivotement (S),
la course de déplacement du deuxième dispositif de guidage et de déplacement (30) dans la direction latérale (X), parallèlement à l'axe pivotement (S), ayant une longueur telle, qu'un outil tenu dans le porte-outil puisse être amené en prise de manière sélective avec les deux pièces (22, 22') à usiner des deux porte-pièces (8, 9),
et les dispositifs d'avance (Y, Z) des unités d'usinage (13, 14) formant entre elles un angle tel, que lesdites unités d'usinage (13, 14) puissent être déplacées indépendamment l'une de l'autre dans la direction latérale (X).

2. Machine-outil selon la revendication 1, **caractérisée en ce que** la course de déplacement (X) du premier dispositif de guidage et de déplacement (30) est orientée perpendiculairement à la direction d'avance (Z) et **en ce que** la première broche de travail (11) peut être déplacée à l'aide du premier dispositif de guidage et de déplacement (30) dans une direction de déplacement (Y) supplémentaire, qui est orientée perpendiculairement à la fois à la direction latérale (X) et à la direction d'avance (Z).

3. Machine-outil selon la revendication 1, **caractérisée en ce que** la course de déplacement du deuxième dispositif de guidage et de déplacement (30') est orientée de préférence perpendiculairement à la direction d'avance (Y), et **en ce que** la deuxième broche de travail (12) peut être déplacée à l'aide du deuxième dispositif de guidage et de déplacement (30') dans une direction de déplacement (X) supplémentaire qui, de préférence, est orientée perpendiculairement à la fois à la direction latérale (X) et à la direction d'avance (Y).

4. Machine-outil selon la revendication 1, **caractérisée en ce que** chaque support (116, 116') comporte deux dispositifs porte-pièces (121a, 121b) et **en ce qu'**au moins la première unité d'usinage (113) présente au moins une paire de broches (141), à laquelle appartiennent la broche (141a) et au moins une broche (141b) supplémentaire.

5. Machine-outil selon la revendication 4, **caractérisée en ce que** chaque broche de travail (11, 12) est pourvue chaque fois d'une tête revolver (40, 40') avec plusieurs broches (41, 42, 43, 44, 45, 46 ; 41', 42', 43', 44', 45', 46') entraînées qui portent chacune des outils distincts, les axes de rotation des broches de travail (11, 12) étant orientés dans des directions différentes, de préférence perpendiculairement, les uns par rapport aux autres.

6. Machine-outil selon la revendication 1, **caractérisée en ce que** les supports (16, 16') des porte-pièces (8, 9) sont conformés en U, sont disposés l'un à côté de l'autre et présentent deux ailes (18, 19 ; 18', 19'), qui sont reliées côté extrémité par une âme (17, 17'), sur laquelle est disposé le dispositif porte-pièce (21, 21') et **en ce que** les extrémités des ailes (18, 19 ; 18', 19') éloignées de l'âme (17, 17') sont reliées à l'unité de positionnement (28, 28'), qui définit l'axe de pivotement (S), les axes de pivotement (S) des deux supports (16, 16') concordant l'un avec l'autre.

7. Machine-outil selon la revendication 1, **caractérisée en ce que** le dispositif porte-pièce (21, 21' ; 121a, 121b) présente un dispositif de positionnement angulaire (23, 23'), à l'aide duquel la pièce (22, 22') bridée peut être déplacée de manière ciblée autour d'un axe de déplacement (V), qui est orienté de préférence perpendiculairement à l'axe de pivotement (S) et coupe ledit axe de pivotement (S).

8. Machine-outil selon la revendication 7, **caractérisée en ce que** le dispositif porte-pièce (21, 21' ) définit un plan de bridge, dont la distance par rapport à l'axe de pivotement (S) est réglable.

9. Machine-outil selon la revendication 2, **caractérisée en ce que** les dispositifs de positionnement angulaire (123, 123') peuvent être actionnés en synchronisme mutuel.

10. Machine-outil selon la revendication 9, **caractérisée en ce que** les dispositifs de positionnement angulaire (123, 123') présentent un entraînement commun.

11. Machine-outil selon la revendication 2, **caractérisée en ce que** les broches (141a à 150b) de chaque paire de broches (141 à 150) sont entraînées en synchronisme, les broches (141a, 141b ; 141'a, 141'b) de chaque paire de broches (141, 141') présentant de préférence une source d'entraînement (111, 112) commune.

12. Machine-outil selon la revendication 1 ou 7, **caractérisée en ce que** les broches (141a, 141 b ; 141'a, 141'b) sont prévues en tant que paires sur une tête revolver (140, 140'), qui présente plusieurs broches entraînées (141a à 150b ; 141'a à 150'b) portant des outils distincts, les broches (141a, 150b) des paires de broches (141 à 150) étant disposées parallèlement à une ligne médiane passant au milieu entre celles-ci et située sur la surface enveloppe d'un cône imaginaire.

13. Machine-outil selon la revendication 12, **caractérisée en ce que** les broches (141a à 150b) des paires de broches (141 à 150) sont disposées parallèlement à une ligne médiane passant au milieu entre celles-ci et située alternativement sur la surface enveloppe d'un cône imaginaire avec un angle de cône relativement grand et sur la surface enveloppe d'un cône imaginaire avec un angle de cône relativement petit.
